# EUROPÄISCHE PATENTSCHRIFT

(11) **EP 2 811 318 B1**
(45) Veröffentlichungstag und Bekanntmachung des Hinweises auf die Patenterteilung: **22.07.2015**
(21) Anmeldenummer: 14168879.6
(22) Anmeldetag: 19.05.2014
(51) Int. Cl.: G01S 17/42, G01S 7/48, G01S 7/51

(54) **Optoelektronischer Sensor**
Optoelectronic sensor
Capteur optoélectronique

(30) Priorität: 05.06.2013 DE 102013210448
(43) Veröffentlichungstag der Anmeldung: 10.12.2014
(73) Patentinhaber: SICK AG, 79183 Waldkirch/Breisgau (DE)
(72) Erfinder: Pirkl, Klaus, 60313 Frankfurt a.M. (DE); Rapp, Torsten, 79106 Freiburg i. Br. (DE)
(74) Vertreter: Manitz, Finsterwald & Partner GbR

(56) Entgegenhaltungen:
- WO-A1-2011/070313
- WO-A2-2012/107892
- DE-A1- 10 022 321
- GB-A- 2 462 709
- US-A1- 2002 093 486
- US-A1- 2011 260 033
- Celluon: "Celluon Magic Cube -World's only virtual projection keyboard a", , 28. Juni 2011 (2011-06-28), XP55147502, Gefunden im Internet: URL:http://www.youtube.com/watch?v=g0qARDG Jj1w [gefunden am 2014-10-20]

## Beschreibung

Die vorliegende Erfindung betrifft einen optoelektronischen Sensor, nämlich einen optoelektronischen Scanner, zur Überwachung eines Überwachungsbereichs, mit wenigstens einem Lichtsender zur Aussendung von Lichtsignalen in den Überwachungsbereich, wenigstens einem Lichtempfänger zum Empfangen von Licht, das aus dem Überwachungsbereich kommt, und einer mit dem wenigstens einen Lichtempfänger verbundenen Steuereinrichtung zur Anzeige eines Menüs.

Zur Überwachung, beispielsweise von Arbeitsbereichen oder von Maschinen, werden häufig optoelektronische Sensoren, insbesondere Scanner, eingesetzt. Der optoelektronische Scanner sendet dabei während der Überwachung Lichtsignale in den Überwachungsbereich, welche von einem dort gegebenenfalls vorhandenen Objekt remittiert bzw. reflektiert werden. Zumindest ein Teil des remittierten bzw. reflektierten Lichts gelangt wieder zurück zu dem optoelektronischen Scanner und wird dort von dem Lichtempfänger detektiert. Wird beispielsweise eine Person oder ein Gegenstand in einem gesperrten Bereich des Überwachungsbereichs festgestellt, so kann zum Beispiel eine mit dem Scanner verbundene Maschine gestoppt werden.

Derartige optoelektronische Scanner können nicht nur zur Überwachung eines Überwachungs-, Schutz- und/oder Gefahrenbereichs eingesetzt werden, sondern auch zur Erstellung von Entfernungsprofilen und 3D-Abtastungen. Der verwendete Begriff "Überwachung" soll in diesem allgemeinen Sinn verstanden werden, auch wenn hier mehrheitlich Beispiele der Sicherheitsanwendung beschrieben sind.

Bekannte optoelektronische Scanner umfassen eine Steuereinrichtung, welche mit dem Lichtempfänger verbunden ist und zur Anzeige eines Auswahlmenüs ausgebildet ist. Das Auswahlmenü (im vorliegenden Text auch "Menü") kann beispielsweise auf einem an dem optoelektronischen Scanner angebrachten Display angezeigt werden und eine Konfiguration bzw. Steuerung des optoelektronischen Scanners selbst und/oder einer mit dem Scanner verbundenen Maschine gestatten.

Zum Navigieren in dem Menü bzw. zum Steuern oder Bedienen des Menüs wird häufig eine Tastatur, z.B. eine Folien-Tastatur verwendet, die an dem optoelektronischen Scanner angebracht ist. Daran ist nachteilig, dass der optoelektronische Scanner durch einen Bediener direkt zugänglich sein muss. Zudem können in dem Menü umfangreiche Geräteinformationen und Einstellungsmöglichkeiten für den optoelektronischen Scanner und/oder die angeschlossene Maschine hinterlegt sein, die üblicherweise in einer komplexen Menü-Struktur abgelegt sind. Daraus resultiert eine aufwändige und umständliche Navigation in der Menüstruktur mittels der Tastatur.

Die US 2011/0260033 A1 zeigt eine Laser-Messeinrichtung gemäß dem Oberbegriff des Anspruchs 1. Die Messeinrichtung ist in der Lage die Position eines Reflektors mittels Entfernungs- und Winkelmessung zu bestimmen. Ein Benutzer kann die Messeinrichtung anweisen, bestimmte Aktionen auszuführen, indem mit dem Reflektor bestimmte Bewegungen ausgeführt werden oder der Reflektor auf einer Tafel mit Anweisungen oberhalb bestimmter Anweisungen platziert wird.

Der Erfindung liegt die Aufgabe zugrunde, einen optoelektronischen Scanner anzugeben, der ein bedienerfreundliches Navigieren und/oder Steuern in einem Menü gestattet.

Erfindungsgemäß wird diese Aufgabe durch einen optoelektronischen Scanner gemäß Anspruch 1 und insbesondere dadurch gelöst, dass die Steuereinrichtung ausgebildet ist, Gesten in einem Überwachungsbereich zu erkennen und als Signale zu interpretieren, die ein Navigieren und/oder Steuern in einem Menü auslösen.

Erfindungsgemäß handelt es sich bei dem optoelektronischen Sensor um einen Scanner, insbesondere einen Laserscanner. Solche Laserscanner - besonders deutlich bei Sicherheitscannern - bieten ein sicheres und in der Regel ständig aktives Messprinzip, das auf einfache und vorteilhafte Weise auch zur Erkennung der Gesten eingesetzt werden kann, mit denen in dem Menü navigiert bzw. gesteuert werden soll, wie es im Folgenden näher erläutert werden wird.

Der wenigstens eine Lichtempfänger des erfindungsgemäßen optoelektronischen Scanners kann zum Beispiel auf derselben Seite wie der wenigstens eine Lichtsender angeordnet sein. Befindet sich in dem Überwachungsbereich ein Objekt, so wird von dem Sender in den Überwachungsbereich gesendetes Licht zurückgeworfen (also reflektiert oder remittiert) und gelangt wieder zu dem Empfänger.

Erfindungsgemäß ist die Steuereinrichtung ausgebildet, Objekte in dem Überwachungsbereich anhand von von dem Lichtempfänger ermittelten Daten zu erkennen, wobei Bewegungen der Objekte vorbestimmte in der Steuereinrichtung gespeicherte Gesten zugeordnet sind, die wiederum eine vorbestimmte Navigation und/oder Steuerung in dem Menü auslösen.

Beispielsweise kann die Steuereinrichtung eine Hand, einen Fuß, den Kopf oder den Körper eines Bedieners erkennen und eine vorbestimmte Bewegung der Hand, des Fußes, des Kopfes oder des Körpers als Signal interpretieren, eine bestimmte Navigation und/oder Steuerung in dem Menü auszuführen. Die Erkennung von Gesten ist dabei nicht auf menschliche Gesten beschränkt, eine Geste kann auch durch eine Positionsveränderung eines Objekts oder einen Bewegungsablauf eines Roboters definiert sein.

Ist eine Geste erkannt worden, so wird eine der Geste entsprechende Aktion in dem Menü ausgeführt, wodurch beispielsweise eine Konfiguration des optoelektronischen Scanners verändert werden kann. Außerdem kann durch das Menü eine mit dem Scanner verbundene Maschine konfiguriert oder gesteuert werden, wobei die Maschine auch mittels eines Datennetzwerks mit dem Scanner verbunden sein kann.

Erfindungsgemäß ist der Überwachungsbereich eine zweidimensionale Ebene, insbesondere mit einem Öffnungswinkel von mehr als 180° und/oder einem Radius von mehr als 3 Metern. Somit können zweidimensionale Gesten erkannt werden, bei welchen sich beispielsweise der Abstand einer Hand eines Bedieners oder ein Winkel zu dem optoelektronischen Scanner verändert.

Im Vergleich zu herkömmlichen optoelektronischen Scannern wird somit die Navigation und die Steuerung in dem Menü deutlich vereinfacht, da der Bediener keinen physischen Zugriff auf den optoelektronischen Scanner mehr benötigt, sondern von beliebigen Positionen innerhalb des Überwachungsbereichs in dem Menü navigieren kann. Weiterhin muss keine Tastatur mehr verwendet werden. Stattdessen kann der Bediener intuitive Gesten verwenden.

Durch den Wegfall der Tastatur können folglich auch die Kosten zur Herstellung und Qualitätssicherung der Tastatur entfallen. Zudem müssen die elektromagnetische Verträglichkeit, die Haltbarkeit und - bei Anwendungen mit erhöhter Schutzart - die Dichtigkeit der Tastatur nicht berücksichtigt werden. Auch wird für die Tastatur kein Raum mehr benötigt, wodurch der optoelektronische Sensor platzsparend aufgebaut werden kann.

Ferner kann durch den Einsatz eines erfindungsgemäßen optoelektronischen Sensors insbesondere in biologischen, medizinischen oder chemischen Laboren und/oder in Krankenhäusern vermieden werden, dass zur Navigation in Menüs von Geräten oder Maschinen eine Tastatur benutzt werden muss, auf welcher sich Bakterien, Viren oder gefährliche Substanzen anlagern können und potentiell auf andere Benutzer der Tastatur übertragbar sind.

Vorteilhafte Ausführungsformen der Erfindung sind in der Beschreibung und den Unteransprüchen angegeben.

Vorzugsweise ist eine Geste eine Bewegung, insbesondere einer Hand eines Bedieners, bei welcher an einer Position in den Überwachungsbereich eingegriffen wird und/oder an einer Position aus dem Überwachungsbereich herausgegriffen wird und/oder eine Bewegung zwischen zwei Positionen innerhalb des Überwachungsbereichs erfolgt und/oder ein vorbestimmter Pfad nachgefahren wird. Eine Geste kann also beispielsweise dadurch definiert sein, dass der Bediener seine Hand an einer bestimmten Position in den Überwachungsbereich hineinstreckt. Als Position ist dabei ein vorbestimmtes Feld oder ein Bereich des Überwachungsbereichs, der in einer vorbestimmten Entfernung und/oder einem vorbestimmten Winkel zu dem optoelektronischen Scanner steht, zu verstehen. Weiterhin kann eine Geste beispielsweise aus einer Bewegung der Hand von links nach rechts oder einer kombinierten Bewegung, wie zum Beispiel einer Seitwärtsbewegung mit anschließender Bewegung nach oben, definiert sein.

Ferner ist es möglich, dass eine Geste durch einen seitlichen Schritt, durch einen Schritt auf den Sensor zu oder von dem Sensor weg, durch eine Bewegung der ausgestreckten Arme und/oder eine Bewegung der Hand in Richtung des Sensors (um beispielsweise fiktiv einen Knopf zu drücken) definiert ist.

Gesten können sich auch aus einer Kombination mehrerer der vorstehend genannten Bewegungen zusammensetzen.

Die von der Steuereinrichtung erkennbaren Gesten können in der Steuereinrichtung gespeichert sein.

Bevorzugt ist eine Geste durch den Bediener einlernbar. Dies bedeutet, dass der Bediener eine neue Geste im Überwachungsbereich ausführen kann, die anschließend von der Steuereinrichtung gespeichert wird und somit zu den bereits bekannten Gesten hinzugefügt werden kann. Das Einlernen der neuen Geste kann dabei wiederum durch eine bereits gespeicherte Geste aktiviert werden.

Gemäß weiteren vorteilhaften Ausführungsformen ist durch eine Geste eine tiefer liegende Menü-Ebene oder eine höher liegende Menü-Ebene oder ein Menü-Punkt oder ein nächster Menü-Punkt oder ein vorhergehender Menü-Punkt auswählbar. Alternativ ist eine Aktion in dem Menü auslösbar. Die Auswahl eines bestimmten Menü-Punkts oder die Navigation in eine andere Menü-Ebene können somit jeweils einer bestimmten Geste zugeordnet sein. Auf diese Weise können auch komplexe Befehle wie der Sprung in eine bestimmte Menü-Ebene durch die Ausführung einer einzigen Geste durchgeführt werden. Die Navigation in dem Menü wird somit vereinfacht, wodurch die Steuerung und Konfiguration sowohl des optoelektronischen Sensors als auch einer mit dem Sensor verbundenen Maschine vereinfacht werden kann.

Zusätzlich zur Navigation in dem Menü kann auch ein elektrischer Meldeausgang, beispielsweise für einen Aktor, oder die Maschine direkt durch eine Geste schaltbar sein.

Ebenso ist es möglich, dass durch Auswahl eines entsprechenden Menüpunktes mit Hilfe einer entsprechend definierten Geste ein Befehl ausgelöst wird, der zur Anzeige von Diagnosewerten oder Diagnosedaten dient, die zum Beispiel ein Ergebnis eines Überwachungsvorganges sind.

Ferner kann es vorgesehen sein, dass nach einem bestimmten Zeitintervall, in welchem keine Geste erkannt wird, in ein Hauptmenü des Menüs zurückgesprungen wird.

Bevorzugt erfolgt eine Visualisierung der Gesten, insbesondere in Echtzeit. Sobald also durch die Steuereinrichtung des Sensors eine Geste bzw. ein Teil einer Geste erkannt wird, kann die Geste bzw. der Teil der Geste beispielsweise auf einem Display dargestellt werden. Auf diese Weise erhält der Bediener des Sensors eine Rückmeldung, wie die von ihm ausgeführten Bewegungen erkannt und interpretiert werden. Dies erleichtert es dem Bediener, die Gesten so auszuführen, dass sie von der Steuereinrichtung wie vom Bediener gewünscht erkannt und interpretiert werden.

Gemäß einer weiteren vorteilhaften Ausführungsform ist eine Erkennung der Gesten aktivierbar, wenn sich ein Bediener innerhalb eines vorbestimmten Radius um einen als Scanner ausgebildeten optoelektronischen Sensor aufhält. Werden außerhalb des vorbestimmten Radius Gesten ausgeführt, so können diese zwar von dem optoelektronischen Scanner erkannt werden, lösen aber keine Navigation und/oder Steuerung in dem Menü aus. Der Überwachungsbereich kann also größer ausgebildet sein als ein Bereich, in welchem die Erkennung von Gesten aktiviert ist.

Der vorbestimmte Radius kann dabei einstellbar sein. Auf diese Weise kann eine korrekte Zuordnung der Gesten bei der Verwendung mehrerer optoelektronischer Scanner, insbesondere mit überlappenden Überwachungsbereichen, sichergestellt werden. Somit kann vermieden werden, dass beispielsweise bei größeren Industrieanlagen Gesten von mehreren Scannern gleichzeitig erkannt werden, was zu einer fehlerhaften Navigation führen kann.

Gemäß einer weiteren vorteilhaften Ausführungsform sind dem Bediener mögliche Gesten auf einem Display anzeigbar. Die Anzeige kann beispielsweise in Form von Piktogrammen oder in bewegten Bildern erfolgen. Der Bediener kann die dargestellten Gesten anschließend nachahmen, um in dem Menü zu navigieren. Dabei wird es dem Bediener insbesondere ermöglicht, ihm bisher unbekannte Gesten schnell zu erlernen.

Die Erfindung umfasst weiterhin ein Verfahren zum Betreiben eines optoelektronischen Scanners zur Überwachung eines Überwachungsbereichs, wobei der Überwachungsbereich des Scanners eine zweidimensionale Ebene ist, mit wenigstens einem Lichtsender, wenigstens einem Lichtempfänger und einer mit dem wenigstens einen Lichtempfänger verbundenen Einrichtung zur Anzeige eines Menüs, wobei durch den Lichtsender Lichtsignale in den Überwachungsbereich ausgesandt werden und aus dem Überwachungsbereich kommendes Licht von dem Lichtempfänger empfangen wird. Erfindungsgemäß werden Gesten in dem Überwachungsbereich erfasst (zum Beispiel mit dem Lichtempfänger des Sensors), die Gesten als Signale interpretiert und aufgrund der Signale ein Navigieren und/oder Steuern in dem Menü ausgelöst (zu Beispiel mit einer entsprechend ausgestalteten Steuereinrichtung des Sensors).

Im Folgenden wird beispielhaft ein möglicher Einsatz einer Ausführungsform des erfindungsgemäßen Scanners beschrieben:

Beim Betrieb des optoelektronischen Scanners, der insbesondere als Laserscanner ausgebildet ist, werden wiederkehrende Lichtsignale in den

Überwachungsbereich ausgesandt, deren Reflexionen von dem Lichtempfänger detektiert und von der Steuereinrichtung ausgewertet werden. Betritt nun ein Bediener den Überwachungsbereich und nähert sich dem optoelektronischen Scanner bis auf einen vorbestimmten Radius, so kann die Erkennung der Gesten aktiviert werden. Der Bediener kann anschließend durch die Ausführung von Gesten in einem Menü navigieren, welches ihm beispielsweise auf einem Display angezeigt wird. Ist der Scanner in an sich bekannter Weise als 3D-Scanner ausgebildet, so kann der Bediener zum Beispiel in eine übergeordnete Menü-Ebene gelangen, indem er eine Hand von Schulterhöhe nach oben bewegt.

Während seiner Handbewegung wird der Bediener periodisch von den Lichtsignalen abgetastet, wodurch die Steuereinrichtung erkennen kann, dass der Bediener seine Hand nach oben bewegt. Dies kann als Signal interpretiert werden, in die nächst höher gelegene Menü-Ebene zu wechseln. Während der Bewegung der Hand nach oben kann diese Bewegung zudem auf dem Display visualisiert werden.

Ist die Navigation in die höhere Menü-Ebene abgeschlossen, so kann der Bediener durch eine weitere Geste in dieser Menü-Ebene beispielsweise durch eine Seitwärtsbewegung seiner Hand oder das Ausstrecken einer bestimmten Anzahl von Fingern einen bestimmten Menü-Punkt auswählen. Rein beispielhaft kann eine mit dem ausgewählten Menü-Punkt verknüpfte Aktion (zum Beispiel die Aktivierung einer mit dem Scanner verbundenen Maschine) durch eine Bewegung der Hand des Bedieners auf den Scanner zu, ausgeführt werden.

## Patentansprüche

1. Optoelektronischer Scanner zur Überwachung eines Überwachungsbereichs, mit wenigstens einem Lichtsender zur Aussendung von Lichtsignalen in den Überwachungsbereich und wenigstens einem Lichtempfänger zum Empfangen von Licht, das aus dem Überwachungsbereich kommt,
**dadurch gekennzeichnet, dass** der Überwachungsbereich des Scanners eine zweidimensionale Ebene ist und
der optoelektronische Scanner eine mit dem wenigstens einen Lichtempfänger verbundenen Steuereinrichtung zur Anzeige eines Menüs aufweist, wobei
die Steuereinrichtung ausgebildet ist, Gesten in dem Überwachungsbereich zu erkennen und als Signale zu interpretieren, die ein Navigieren und/oder Steuern in dem Menü auslösen.

2. Optoelektronischer Scanner nach Anspruch 1,
**dadurch gekennzeichnet, dass**
der Scanner ein Laserscanner, ist.

3. Optoelektronischer Scanner nach Anspruch 2,
**dadurch gekennzeichnet, dass**
eine Erkennung der Gesten aktivierbar ist, wenn sich ein Bediener innerhalb eines vorbestimmten Radius um den optoelektronischen Scanner aufhält.

4. Optoelektronischer Scanner nach einem der vorstehenden Ansprüche,
**dadurch gekennzeichnet, dass**
der Überwachungsbereich des Scanners einen Öffnungswinkel von mehr als 180° und/oder einem Radius von mehr als 3 Metern aufweist.

5. Optoelektronischer Scanner nach zumindest einem der vorstehenden Ansprüche,
**dadurch gekennzeichnet, dass**
eine Geste eine Bewegung, insbesondere einer Hand eines Bedieners, ist, bei welcher an einer Position in den Überwachungsbereich eingegriffen wird und/oder an einer Position aus dem Überwachungsbereich herausgegriffen wird und/oder ein Übergang zwischen zwei Positionen innerhalb des Überwachungsbereichs erfolgt und/oder ein vorbestimmter Pfad nachgefahren wird.

6. Optoelektronischer Scanner nach zumindest einem der vorstehenden Ansprüche,
**dadurch gekennzeichnet, dass**
eine Geste durch einen Bediener einlernbar ist.

7. Optoelektronischer Scanner nach zumindest einem der vorstehenden Ansprüche,
**dadurch gekennzeichnet, dass**
durch eine Geste eine tiefer liegende Menü-Ebene oder eine höher liegende Menü-Ebene oder ein Menü-Punkt oder ein nächster Menü-Punkt oder ein vorhergehender Menü-Punkt auswählbar ist oder eine Aktion in dem Menü auslösbar ist.

8. Optoelektronischer Scanner nach zumindest einem der vorstehenden Ansprüche,
**dadurch gekennzeichnet, dass**
eine Visualisierung, insbesondere in Echtzeit, der Geste erfolgt.

9. Optoelektronischer Scanner nach zumindest einem der vorstehenden Ansprüche,
**dadurch gekennzeichnet, dass**
einem Bediener mögliche Gesten auf einem Display anzeigbar sind.

10. Verfahren zum Betreiben eines optoelektronischen Scanner zur Überwachung eines Überwachungsbereichs, wobei der Überwachungsbereich des Scanners eine zweidimensionale Ebene ist, mit wenigstens einem Lichtsender, wenigstens einem Lichtempfänger und einer mit dem wenigstens einen Lichtempfänger verbundenen Einrichtung zur Anzeige eines Menüs, wobei
durch den wenigstens einen Lichtsender Lichtsignale in den Überwachungsbereich ausgesandt werden und
aus dem Überwachungsbereich kommendes Licht von dem wenigstens einen Lichtempfänger empfangen wird,
wobei
Gesten in dem Überwachungsbereich erkannt werden,
die Gesten als Signale interpretiert werden und
aufgrund der Signale ein Navigieren und/oder Steuern in dem Menü ausgelöst wird.

## Claims

1. An optoelectronic scanner for monitoring a monitored zone, having at least one light transmitter for transmitting light signals into the monitored zone and having at least one light receiver for receiving light emanating from the monitored zone,
**characterised in that**
the monitored zone of the scanner is a two-dimensional plane; and the optoelectronic scanner has a control device connected to the at least one light receiver for the display of a menu, wherein
the control device is configured to recognise gestures in the monitored zone and to interpret them as signals which trigger a navigation and/or control in the menu.

2. An optoelectronic scanner in accordance with claim 1,
**characterised in that**
the scanner is a laser scanner.

3. An optoelectronic scanner in accordance with claim 2,
**characterised in that**
a recognition of the gestures can be activated when an operator is present within a predefined radius about the optoelectronic scanner.

4. An optoelectronic scanner in accordance with any one of the preceding claims,
**characterised in that**
the monitored zone of the scanner has an opening angle of more than 180° and/or a radius of more than 3 metres.

5. An optoelectronic scanner in accordance with at least one of the preceding claims,
**characterised in that**
a gesture is a movement, in particular of a hand of an operator, on which an intervention is made into the monitored zone at a position and/or on which a movement out of the monitored zone is made at a position; and/or **in that** a transition takes place between two positions within the monitored zone and/or a predefined path is traced.

6. An optoelectronic scanner in accordance with at least one of the preceding claims,
**characterised in that**
a gesture by an operator can be taught.

7. An optoelectronic scanner in accordance with at least one of the preceding claims,
**characterised in that**
a lower menu level or a higher menu level or a menu item or a next menu item or a preceding menu item can be selected or an action in the menu can be triggered by a gesture.

8. An optoelectronic scanner in accordance with at least one of the preceding claims,
**characterised in that**
a visualisation of the gesture takes place, in particular in real time.

9. An optoelectronic scanner in accordance with at least one of the preceding claims,
**characterised in that**
possible gestures can be presented to an operator on a display.

10. A method of operating an optoelectronic scanner for monitoring a monitored zone, wherein the monitored zone of the scanner is a two-dimensional plane, comprising at least one light transmitter; at least one light receiver; and at least one device connected to the at least one light receiver for the display of a menu, wherein
light signals are transmitted into the monitored zone by the at least one light transmitter; and
light emanating from the monitored zone is received by the at least one light receiver;
wherein
gestures in the monitored zone are recognised;
the gestures are interpreted as signals; and
a navigation and/or control is triggered in the menu on the basis of the signals.

## Revendications

1. Scanner optoélectronique pour la surveillance d'une zone de surveillance, comprenant au moins un émetteur de lumière pour émettre des signaux lumineux vers la zone de surveillance, et au moins un récepteur de lumière pour recevoir la lumière qui vient de la zone de surveillance,
**caractérisé en ce que**
la zone de surveillance du scanner est un plan bidimensionnel et
le scanner optoélectronique comprend un dispositif de commande, relié audit au moins un récepteur de lumière, pour afficher un menu, et
le dispositif de commande est réalisé pour reconnaître des gestes dans la zone de surveillance et les interpréter comme des signaux qui déclenchent une navigation et/ou une commande dans le menu.

2. Scanner optoélectronique selon la revendication 1,
**caractérisé en ce que** le scanner et un scanner à laser.

3. Scanner optoélectronique selon la revendication 2,
**caractérisé en ce qu'**une reconnaissance des gestes est susceptible d'être activée lorsqu'un opérateur séjourne à l'intérieur d'un rayon prédéterminé autour du scanner optoélectronique.

4. Scanner optoélectronique selon l'une des revendications précédentes,
**caractérisé en ce que** la zone de surveillance du scanner présente un angle d'ouverture de plus de 180° et/ou un rayon de plus de trois mètres.

5. Scanner optoélectronique selon l'une au moins des revendications précédentes,
**caractérisé en ce que**
un geste est un mouvement, en particulier d'une main d'un opérateur, lors duquel une intervention a lieu à une position dans la zone de surveillance et/ou une intervention consiste à quitter une position hors de la zone de surveillance et/ou il se produit une transition entre deux positions à l'intérieur de la zone de surveillance et/ou il se produit une poursuite d'un trajet prédéterminé.

6. Scanner optoélectronique selon l'une au moins des revendications précédentes,
**caractérisé en ce qu'**un geste est susceptible d'être appris par un opérateur.

7. Scanner optoélectronique selon l'une au moins des revendications précédentes,
**caractérisé en ce qu'**il est possible de sélectionner au moyen d'un geste un plan de menu situé plus bas ou un plan de menu situé plus haut, ou encore un point de menu ou un point de menu successif ou bien un point de menu précédent, ou encore il est possible de déclencher une action dans le menu.

8. Scanner optoélectronique selon l'une au moins des revendications précédentes,
**caractérisé en ce qu'**il se produit une visualisation des gestes, en particulier en temps réel.

9. Scanner optoélectronique selon l'une au moins des revendications précédentes,
**caractérisé en ce que** des gestes possibles sont susceptibles d'être présentés à un opérateur sur un affichage.

10. Procédé pour le fonctionnement d'un scanner optoélectronique pour la surveillance d'une zone de surveillance, dans lequel la zone de surveillance du scanner est un plan bidimensionnel, le scanner comprenant au moins un émetteur de lumière, au moins un récepteur de lumière, et un dispositif, relié audit au moins un récepteur de lumière, pour l'affichage d'un menu, dans lequel
on émet des signaux lumineux vers la zone de surveillance avec ledit au moins un émetteur de lumière, et
la lumière qui vient de la zone de surveillance est reçue par ledit au moins un récepteur de lumière,
et
on reconnaît des gestes dans la zone de surveillance,
les gestes sont interprétés comme des signaux, et
au moyen des signaux, on déclenche une navigation et/ou une commande dans le menu.
